# EUROPÄISCHE PATENTANMELDUNG

(11) **EP 2 610 830 A1**
(43) Veröffentlichungstag der Anmeldung: **03.07.2013**
(21) Anmeldenummer: 12008464.5
(22) Anmeldetag: 20.12.2012
(51) Int. Cl.: G08B 5/00

(54) **Warnleuchtsäule**

(30) Priorität: 29.12.2011 DE 102011122531
(71) Anmelder: WERMA Holding GmbH + Co. KG, 78604 Rietheim-Weilheim (DE)
(72) Erfinder: Höhler, Christian, 78669 Wellendingen (DE)
(74) Vertreter: Roth, Klaus

(57) **Zusammenfassung**

Es wird eine Warnleuchtsäule zur optischen Anzeige von wenigstens einem Betriebszustand von einem technischen Gerät wie einer Maschine, einer Anlage, eines Fahrzeugs oder dergleichen mit wenigstens einer zumindest ein Warnleuchtelement und/oder eine Leuchtdiode und/oder ein Warntongenerator aufweisenden Warneinheit (1), bei der im Anschluss an die Warneinheit (1) in Richtung der Längsachse der Warnleuchtsäule eine Haltevorrichtung (2) angeordnet ist, wobei die Warneinheit (1) wenigstens ein im Wesentlichen als Rohrelement (8) ausgebildetes Mantelelement (8) zum Ummanteln des Warnleuchtelementes und/oder der Leuchtdiode und/oder des Warntongenerators aufweist, vorgeschlagen, die besondere ästhetische Anforderungen erfüllt und insbesondere besonders wirtschaftlich günstig herstellbar ist. Dies wird erfindungsgemäß dadurch erreicht, dass die Haltevorrichtung (2) und das Mantelelement (8) der Warneinheit (1) als sichtbares Licht durchlässige Säulenelemente (1, 2, 8) ausgebildet sind.

## Beschreibung

Die Erfindung betrifft eine Warnleuchtsäule zur optischen Anzeige von wenigstens einem Betriebszustand eines technischen Geräts mit wenigstens einer zumindest ein Warnleuchtelement und/oder eine Leuchtdiode und/oder ein Warntongenerator aufweisenden Warneinheit nach dem Oberbegriff des Anspruchs 1.

### Stand der Technik

Bereits seit vielen Jahren sind Signalsäulen mit mehreren Wechselmodulen zur Signalisierung von Betriebszuständen von Maschinen wie Werkzeugmaschinen, Produktionsbänder oder dergleichen bekannt. Zudem sind auch bereits vorkonfektionierte Warnleuchtsäulen mit vorgegebenen, fest fixierten bzw. nicht austauschbaren und unterschiedliche Farben aufweisende Warnleuchteinheiten bzw. -abschnitten bekannt. So sind im Allgemeinen unterschiedlich farbige Anzeigemodi vorgesehen, um beispielsweise einen Betriebszustand "alles in Ordnung" oder "Magazin leer" etc. farblich zu kennzeichnen. Zudem können akustische Signalgeber wie Piezosummer oder ein Horn oder dergleichen in der Warnleuchtsäule integriert sein.

Derartige Warnleuchtsäulen werden vielfach in der Industrie bzw. in gewerblichen Anwendungen eingesetzt, wobei die Säulen meist an einem erhöhten Ort bzw. an einer gut sichtbaren Stelle unmittelbar am Gerät oder in der Nähe des Aufenthaltsplatzes einer Überwachungsperson angebracht sind, z.B. an einer Gebäudewand oder an der Gebäude- bzw. Zimmer-Decke etc. Vor allem in industriellen Anwendungen spielt die Wirtschaftlichkeit und die Betriebssicherheit bzw. die Praxistauglichkeit meist die entscheidende Frage bei der Ausgestaltung entsprechender Warnleuchtsäulen.

Jedoch werden derartige Warnleuchtsäulen auch in (gewerblichen) Anwendungen eingesetzt, wobei nicht nur die Betriebssicherheit bzw. die Wirtschaftlichkeit oder dergleichen, sondern vor allem auch ästhetische Aspekte eine wichtige, gegebenenfalls sogar eine entscheidende Rolle spielen. Dies ist vor allem in Bereichen mit hohem Kunden- bzw. Besucheraufkommen von hoher Relevant.

Für derartige, eher "Design orientierte Anwendungen" sind bereits Signalsäulen bekannt, wobei vielfach Warneinheiten bzw. Wechselmodule mit weißlich, milchigem Aussehen, insb. der Kalotte, eingesetzt werden und der Sockel bzw. Deckel entsprechender Warnleuchtsäulen werden in Edelstahl bzw. in einem Edelstahldesign ausgeführt. Dies führt jedoch zu vergleichsweise hohen Kosten.

### Aufgabe und Vorteile der Erfindung

Aufgabe der Erfindung ist es demgegenüber, eine Warnleuchtsäule der eingangs genannten Art vorzuschlagen, die besondere ästhetische Anforderungen erfüllt und insbesondere besonders wirtschaftlich günstig herstellbar ist.

Diese Aufgabe wird, ausgehend von einer Warnleuchtsäule der einleitend genannten Art durch die Merkmale des Anspruchs 1 gelöst. Durch die in den abhängigen Unteransprüchen genannten Maßnahmen sind vorteilhafte Ausführungen und Weiterbildungen der Erfindung möglich.

Dementsprechend zeichnet sich eine erfindungsgemäße Warnleuchtsäule dadurch aus, dass die Haltevorrichtung und das Mantelelement der Warneinheit als sichtbares Licht durchlässige Säulenelemente ausgebildet sind und dass die Warnleuchtsäule eine im Wesentlichen sich über das/die Mantelelemente sowie die Haltevorrichtung erstreckende durchgehende, einheitliche, d.h. homogene bzw. identische Hülle bzw. Kontur aufweist.

Mit Hilfe der Erfindung kann einerseits eine im ausgeschalteten bzw. nicht leuchtenden Zustand von Personen wenig bzw. nahezu gar nicht wahrnehmbare Signalsäule realisiert werden. Das bedeutet, dass die Warnleuchtsäule gemäß der Erfindung sehr unscheinbar ist, so dass diese auf einem technischen Gerät bzw. am Befestigungsort vor allem im Auszustand kaum oder sogar gar nicht wahrgenommen wird. Erst beim Aufleuchten der Warnleuchtelemente bzw. Leuchtdioden oder dergleichen in einer entsprechenden Warnfarbe und im Warnzustand nehmen entsprechende Personen die Warnleuchtsäule gemäß der Erfindung wahr.

Als sichtbares Licht durchlässiges Material für die vorteilhaften Säulenelemente/-komponenten gemäß der Erfindung können vor allem neben Glas vorzugsweise entsprechende Kunststoffe wie Plexiglas verwendet werden. Hierdurch lassen sich im Vergleich zum beim Stand der Technik verwendeten Edelstahl auch erheblich kostengünstigere Warnleuchtsäulen realisieren.

Andererseits kann mittels der erfindungsgemäßen, durchgehenden, identischen bzw. gleichartigen Hülle ein neuartiges, einheitliches bzw. gleichartiges Aussehen der ganzen Warnleuchtsäule realisiert werden. Es hat sich überraschender Weise in ersten Versuchen gezeigt, dass dies gerade durch die Kombination mit den/dem sichtbares Licht durchlässige Säulenelement bzw. Säulenelemente besonders hochwertige ästhetische Anforderungen erfüllt und zudem besonders kostengünstig herstellbar ist.

Beispielsweise kann ein einstückiges Rohr bzw. Rohrelement vorgesehen werden, dass sowohl das/die Mantelelemente der Warneinheit bzw. Warnleuchteinheiten und zudem auch die Haltevorrichtung umfasst. Hierbei können die eine oder mehrere Warneinheiten bei der Herstellung gegebenenfalls gemeinsam bzw. als eine einstückige Baueinheit oder separat als getrennte Einheiten montiert werden. Das bedeutet, dass bei dieser Variante durch die Montage bzw. Platzierung die Bereiche "Warneinheit" bzw. Leuchtbereich und der Bereich "Haltevorrichtung" bzw. Fuß der Säule definiert bzw. festgelegt wird. Hierdurch wird eine sehr hohe Flexibilität bei der Anordnung der verschiedenen Säulenbereiche erreicht.

Auch können beispielsweise mehrere Segmente mit gleicher bzw. identischer Hülle bei der Herstellung der erfindungsgemäßen Warnleuchtsäule als Haltevorrichtung und als Warneinheit bzw. Warneinheiten verwendet werden und in vorteilhafter Weise in axialer Richtung nebeneinander bzw. benachbart angeordnet und in vorteilhafter Weise miteinander verbunden werden. Diese Verbindung kann sowohl lösbar, insbesondere ohne Werkzeug lösbar, ausgebildet werden oder alternativ durchaus auch stoffschlüssig bzw. materialschlüssig, gegebenenfalls unter Zuhilfenahme eines Zusatzstoffes wie eines Klebers, fest miteinander fixiert bzw. quasi unlösbar miteinander verbunden werden.

Es ist denkbar, dass beispielsweise Materialien bzw. Säulenelemente gemäß der Erfindung verwendet werden, die nur wenig oder kaum sichtbares Licht durchlässig sind, so dass beispielsweise ein einheitlicher, identischer und durchgehender Hüllencharakter bezüglich (bunter) Farbe bzw. Oberfläche realisierbar ist. So kann eine Tönung bzw. Einfärbung der Mantelelemente und der Haltevorrichtung in unterschiedlichsten (bunten) Farben vorgesehen werden. Beispielsweise kann eine durchgehend schwarze oder graue bzw. silbrige oder weiße, glänzend oder matte Hülle vorgesehen werden, wobei die Warneinheit im eingeschalteten Leuchtzustand aufgrund vergleichsweise starker oder stärkerer Intensität in einer entsprechenden Warnfarbe wie rot, gelb, blau oder grün aufleuchtet. Hierdurch ist die Warnleuchtsäule gemäß der Erfindung im ausgeschalteten Zustand ebenfalls vergleichsweise unscheinbar. Diese wird beispielsweise als Rohr oder Säule mit unscheinbarem Design im ausgeschalteten Zustand ebenfalls kaum (störend) wahrgenommen und am zu überwachenden technischen Gerät bzw. am Betriebsort angebracht und erst durch das Aufleuchten als Warnleuchtsäule gemäß der Erfindung wahrgenommen. Beispielsweise kann auch als Hülle ein so genanntes Rauchglas bzw. vorteilhaft eingeschwärzte bzw. getönte Kunststoffe wie Kunststoffrohre oder dergleichen verwendet werden.

So ist grundsätzlich auch denkbar, im Wesentlichen die gesamte Warnleuchtsäule gemäß der Erfindung in der jeweiligen bzw. individuellen Farbe der entsprechenden Firma bzw. des zu überwachenden Gerätes auszuführen, z.B. in Magenta, in Saatengrün, in Gelb, in Orange etc., wobei im Warnzustand bzw. durch das Aufleuchten der Leuchtelemente bzw. LED ein Abschnitt bzw. die jeweilige Warneinheit der Säule in der Warnfarbe aufleuchtet. Hier ist beispielsweise eine (leichte) farbige Tönung bzw. Schattierung der gesamten, insbesondere aus einem Plexiglasrohr oder dergleichen hergestellten Säule von besonderem, ästhetischem Vorteil. Gegebenenfalls sind unterschiedlich stark getönte Bereiche vorgesehen, z.B. die Warneinheit ist/sind leichter bzw. schwächer getönt als die Haltevorrichtung, ohne dass in ausgeschalteten Zustand hierdurch von außen bzw. für ein die Säule betrachtende Person ein Unterschied bzgl. der verschieden stark getönten Bereiche wahrnehmbar ist.

In einer vorteilhaften Ausführungsform der Erfindung ist die Haltevorrichtung im Wesentlichen aus einem Rohrelement wie das Mantelelement der Wareneinheit ausgebildet, wobei in Richtung der Längsachse der Warnleuchtsäule betrachtet das Rohrelement der Haltevorrichtung eine andere Länge, insbesondere eine größere Länge als das Rohrelement des Mantelelementes aufweist. Mit dieser Maßnahme wird erreicht, dass vorzugsweise gleiche Rohrelemente sowohl für die Haltevorrichtung bzw. für den so genannten Sockel bzw. Fuß der Warnleuchtsäule als auch für die Warneinheit bzw. für ein Wechselmodul verwendet werden, wobei diese jedoch im Allgemeinen unterschiedliche Längen aufweisen. So werden gewöhnlich vergleichsweise kurze Warneinheiten bzw. Wechselmodule, das heißt in Längsrichtung der Warnleuchtsäule kleine Längen der Warneinheiten, vorgesehen. Dagegen ist häufig die Haltevorrichtung bzw. der Sockel oder Fuß einer entsprechenden Warnleuchtsäule wesentlich länger, zum Beispiel um ein Vielfaches bzw. um das drei- bis zehnfache länger als eine einzelne Warneinheit.

Vorzugsweise weisen die Hülle und/oder die Rohrelemente des bzw. der Mantelelemente und das Rohrelemente der Haltevorrichtung im Wesentlichen die gleichen Außendurchmesser bzw. geometrischen Abmessungen und insbesondere die gleiche Form bzw. Silhouette auf. Hiermit wird eine vorteilhafte, einheitliche, durchgehende identische Hülle generierbar, die auch bei einer mehrteiligen Bauweise der Warnleuchtsäule gemäß der Erfindung den optischen Anschein einer einstückigen Warnleuchtsäule generiert. Es hat sich in ersten Versuchen mit Testpersonen gezeigt, dass eine derartige Warnleuchtsäule im ausgeschalteten Zustand besonders unscheinbar bzw. unauffällig ist.

Grundsätzlich kann die Warneinheit bzw. das Mantelelement Erhebungen oder Vertiefungen bzw. Reflektoren oder dergleichen vorzugsweise an der Innenseite des Mantelelementes aufweisen, so dass das im Inneren der Warneinheit erzeugte Warnlicht sich in vorteilhafter Weise ausbreitet. So können derartige Erhebungen bzw. Vertiefungen und/oder Rillen, Nuten etc. in vorteilhafter Weise ausgebildet werden, um eine vorteilhafte Lichtlenkung zu generieren.

Es ist eine milchige Oberfläche bzw. milchiger Charakter des Mantelelementes und der Haltevorrichtung möglich. Vorzugsweise sind die Haltevorrichtung und das Mantelelement der Warneinheit als glasklares Rohrelement ausgebildet. Entsprechende Personen nehmen bei einem gewöhnlichen Verwendungszweck in gewerblichen Räumen bzw. Orten die Warnleuchtsäule gemäß der Erfindung hierdurch kaum wahr, da die Gegenstände hinter der Warnleuchtsäule gemäß der Erfindung gegebenenfalls etwas optisch verzerrt bzw. verschwommen trotzdem sichtbar sind bzw. durchscheinen. Hierdurch entsteht für entsprechend anwesende Personen der Eindruck, dass die Warnleuchtsäule gemäß der Erfindung unsichtbar ist bzw. von der Umgebung bzw. des Hintergrundes "verschluckt" wird und nur bei genauer Betrachtung wahrgenommen wird.

In einer besonderen Weiterbildung der Erfindung weist die Warneinheit und/oder die Haltevorrichtung wenigstens einen elektrischen Leiter zum Leiten von elektrischer Energie und/oder elektrischen Signalen auf. Hierdurch kann in vorteilhafter Weise die Energieversorgung bzw. Signalisierung realisiert werden.

Vorzugsweise weist der Leiter wenigstens eine lichtdurchlässige und/oder glasklare elektrische Isolierung auf. Vor allem bei der Verwendung von lichtdurchlässigen bzw. glasklaren Mantelelementen und/oder Haltevorrichtungen werden die elektrischen Leiter bzw. die Elektronikkomponenten von außen sichtbar. Hier wird durch die Verwendung einer entsprechend vorteilhaften elektrischen Isolierung und/oder unscheinbaren bzw. weißen oder weitgehend durchsichtigen Elektronikträgern bzw. Leiterplatten oder dergleichen die Wahrnehmbarkeit entsprechender Personen im ausgeschalteten Zustand der Warnleuchtsäule gemäß der Erfindung weiter verringert bzw. erschwert. Somit sind vor allem weißliche bzw. gräuliche oder gar für sichtbares Licht durchsichtige bzw. glasklare Komponenten von besonderem Vorteil.

Grundsätzlich ist denkbar, dass das/die Mantelelemente und/oder die Haltevorrichtung als sichtbares Licht durchlässige und/oder glasklare elektrische Isolierung ausgebildet werden kann. Beispielsweise kann ein als Plexiglasrohr ausgebildetes Mantelelement und/oder Haltevorrichtung die elektrische Isolierung zwischen zwei elektrischen Leitern gemäß der Erfindung realisieren. Das bedeutet, dass möglicherweise eine auf der Innenseite angebrachte Leiterbahn bzw. ein elektrischer Leiter gegenüber einem weiteren elektrischen Leiter durch das Plexiglas bereits voneinander elektrisch isoliert sind.

Vorzugsweise wird ein Metalldraht, insbesondere ein Kupferdraht als elektrischer Leiter gemäß der Erfindung verwendet. Allerdings sind durchaus auch elektrisch leitende Kunststoffe oder Kohlenstoffleiter denkbar, die zum Teil selbst für sichtbares Licht durchlässig bzw. nahezu glasklar ausgebildet werden können. Dementsprechend ist auch der elektrische Leiter gemäß der Erfindung nicht bzw. kaum wahrnehmbar. In vorteilhaften Auftrags- bzw. Beschichtungsverfahren, vorzugsweise an der Innenseite der Haltevorrichtung und/oder der Mantelelemente bzw. Warneinheiten kann der elektrische Leiter durch bedrucken, lackieren, sprühen oder dergleichen angebracht werden, gegebenenfalls auch bei den vergleichsweise beengten Platzverhältnissen in einem entsprechenden Rohrelement.

Vorzugsweise wird ein Metalldraht vorgesehen bzw. weist ein elektrischer Leiter ein Leitungsquerschnitt ≤ 0,05 mm auf. Hierbei kann beispielsweise ein Leiter mit einem Gesamtquerschnitt von 0,25 mm verwendet werden, wobei als elektrische Isolierung beispielsweise in vorteilhafter Weise ein durchsichtiger Lack oder Kunststoffschlauch etc. vorgesehen ist.

Zur Verbesserung der Nichtwahrnehmbarkeit bzw. der Unscheinbarkeit des elektrischen Leiters kann auch ein Gesamtquerschnitt von ≤ 0,15 mm und ein Leiterquerschnitt von ≤ 0,02 mm oder sogar ein Gesamtquerschnitt von ≤ 0,1 mm und ein Drahtquerschnitt bzw. Leiterquerschnitt von ≤ 0,01 mm vorgesehen werden. In besonderen Fällen kann sogar ein elektrischer Leiter mit einem Gesamtquerschnitt von ≤ 0,05 mm und ein Leiterquerschnitt von ≤ 0,003 mm verwendet werden. Beispielsweise kann hierfür ein so genannter Trafodraht eingesetzt werden, der bereits handelsüblich ist. Es hat sich gezeigt, dass in praxisnahen Tests derartige elektrische Leiter nahezu unsichtbar für Personen sind.

Grundsätzlich kann in vorteilhafter Weise wenigstens eine Fixiervorrichtung zum lösbaren Fixieren der Warneinheit im montierten Betriebszustand vorgesehen werden. Beispielsweise kann dies ein Bajonettverschluss oder eine Schraubverbindung oder eine Steck- bzw. Klemmverbindung oder dergleichen sein.

Vorzugsweise ist ein Kleber zum Verbinden des Mantelelementes der Warneinheit mit der Haltevorrichtung und/oder mit einem weiteren Mantelelement der Warneinheit und/oder einem Deckelelement vorgesehen. Beispielsweise wird ein Kunststoffkleber bei der Verwendung von Kunststoffrohren oder dergleichen verwendet. Bei Klebern ist von besonderem Vorteil, dass diese vergleichsweise dünn aufgetragen werden können und für unterschiedlichste Materialien einsetzbar sind. Durch die geringe Dicke bzw. das dünne Auftragen ist auch der Kleber nahezu unscheinbar.

Generell kann auch ein Schweißverfahren, insbesondere Kunststoffschweißverfahren bzw. Ultraschallschweißverfahren zum Verbinden der Komponenten bzw. der Warneinheit mit der Haltevorrichtung und/oder einer weiteren Warneinheit und/oder einem Deckelelement vorgesehen werden.

In einer bevorzugten Ausführungsform der Erfindung ist eine Warnleuchtsäule zum Beispiel durch Zusammenkleben von einzelnen Plexiglasrohrsegmenten realisiert. Hierbei kann die Haltevorrichtung bzw. der "Fuß" bzw. "Sockel" der Warnleuchtsäule wie die einzelnen Warneinheiten in vorteilhafter Weise aus einem standardisierten Plexiglasrohr ausgebildet werden. Durch die Verwendung identischer Bauelemente bzw. Rohre, die in vorteilhafter Weise verbunden, vorzugsweise zusammengeklebt werden, entsteht ein einheitliches, durchgehendes und identisches Design über die volle Höhe der Warnleuchtsäule gemäß der Erfindung. Dementsprechend ist eine durchgehende, identische Hülle mit besonders wenig konstruktivem Aufwand herstellbar. Dies ist wirtschaftlich besonders günstig.

Vorzugsweise sind nicht nur eine Warneinheit, sondern mehrere Warneinheiten vorgesehen, die vorzugsweise durch abgetrennte bzw. gelaserte oder abgesägte Plexiglasrohre als Mantelelemente vorbereitet sind und in denen Elektronikkomponenten bzw. die Warnleuchtelemente und/oder Leuchtdioden etc. angeordnet werden. Zudem weist beispielsweise ein Segment bzw. diese Warneinheit ein separates Kabel zur Energieversorgung auf, wobei das Kabel in vorteilhafter Weise sehr dünn realisiert wird. Das Kabel bzw. der elektrische Leiter kann beispielsweise die anderen Komponenten bzw. Segmente wie andere Warneinheiten oder die Haltevorrichtung gemäß der Erfindung "durchwandern". Das Kabel wird bis zum Gerät bzw. Befestigungsort oder einem Befestigungsflansch oder dergleichen in vorteilhafter Weise geführt. Dieses Durchwandern bzw. Durchführen des elektrischen Leiters bzw. des dünnen Kabels erfolgt in vorteilhafter Weise derart, dass dieser möglichst nicht geradlinig ausgerichtet bzw. gespannt wird, sondern es hat sich überraschenderweise gezeigt, dass ein unregelmäßiges bzw. loses Anordnen bzw. Herunterhängen des elektrischen Leiters und somit die Ausbildung eines gewellten elektrischen Leiters ohne vordefinierte gleichmäßige Struktur für Personen besonders schwer wahrnehmbar bzw. besonders unscheinbar ist. Entsprechend gewellte bzw. unregelmäßig geformte elektrische Leiter werden vom Hintergrund bzw. der Umgebung "geschluckt" und somit nicht mehr wahrgenommen.

Grundsätzlich sind runde Rohrelemente als auch eckige, quadratische, elliptische oder sonst wie profilierte Rohrelemente gemäß der Erfindung verwendbar.

Die Erfindung kann individuell auf spezielle Kundenwünsche angepasst werden und ist zudem besonders wirtschaftlich günstig herstellbar, beispielsweise durch Verwendung standardisierter Plexiglasrohre, wie dies bereits oben beispielhaft dargestellt ist.

### Ausführungsbeispiel

Ein Ausführungsbeispiel der Erfindung ist in der Zeichnung dargestellt und wird anhand der einzigen Figur nachstehend näher erläutert.

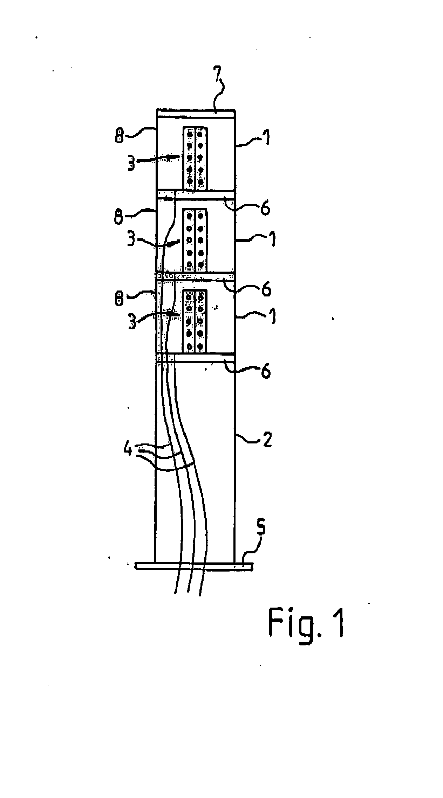

In Figur 1 ist schematisch eine Warnleuchtsäule bzw. Signalsäule gemäß der Erfindung dargestellt, die insgesamt drei Warneinheiten 1 umfasst. Die drei Warneinheiten 1 bzw. Leuchtsegmente 1 sind unmittelbar im Anschluss bzw. benachbart an einen Fuß 2 bzw. eine Haltevorrichtung 2 bzw. Sockel 2 in Längsrichtung der Warnleuchtsäule angeordnet. Der Fuß 2 hält bzw. trägt die Leuchtsegmente 1 an bzw. in ihrer vorgesehenen Position und er wird in vorteilhafter Weise mittels eines Befestigungsflansches 5 am jeweiligen Befestigungsort befestigt bzw. angeordnet.

Eine Warneinheit 1 umfasst eine Kalotte 8 bzw. ein Mantelelement 8, die/das vorzugsweise aus einem Plexiglasrohr mit entsprechender Länge in axialer Richtung verwirklicht ist. Vorzugsweise sind alle drei Warneinheiten 1 bzw. Plexiglasrohrsegmente 8 gleich lang, so dass ein gleichmäßiger optischer Eindruck erzeugt wird. Zudem ist dies auch standardisiert bzw. in vorteilhafter Weise seriell herstellbar und darüber hinaus können Elektronikträger 3 mit zum Beispiel mehreren Leuchtdioden 3 standardisiert und in vergleichsweise großer Stückzahl hergestellt und in der Kalotte 8 in der Warneinheit 1 fixiert werden, z.B. angeklebt werden.

Vorzugsweise sind die Leuchtdioden 3 bzw. Elektronikträger derart im Inneren der Warneinheiten 1 angeordnet, z.B. mehrere LED sowohl in Längsrichtung und/oder mehrere LED in Umfangsrichtung, so dass eine Rundum-Abstrahlcharakteristik realisiert wird. Beispielsweise sind Elektronikträger mit beidseits angeordneten Leuchtdioden bzw. Leuchtelementen vorgesehen. Alternativ hierzu kann auch eine Verwendung von mehreren Elektronikträgern mit einseitig angeordneten Leuchtdioden vorgesehen werden, die beispielsweise um die zentrale Längsachse herum, vorzugsweise im Kreis bzw. als Polygon, angeordnet sind.

Derartige Elektronikträger bzw. Leuchtdioden 3 können auf einem quer zur Längsachse angeordneten Träger bzw. Elektronikträger angeordnet bzw. fixiert werden. Grundsätzlich ist von Vorteil, die verwendeten Elektronikträger bzw. Elektronikkomponenten möglichst unscheinbar, das heißt vorzugsweise farblos oder gar transparent bzw. im gewünschten Farbton bzw. Farbtönung auszubilden, um die Unscheinbarkeit der Warnleuchtsäule gemäß der Erfindung nicht nachteilig zu beeinträchtigen.

Im dargestellten Ausführungsbeispiel gemäß Figur 1 weist jede Warneinheit 1 ein separates Kabel 4 auf, das durch jeweils die darunter liegenden Segmente 1, 2 hindurchgeschleift bzw. hindurchgeführt wird und an einem unteren Befestigungselement bzw. Befestigungsflansch 5 aus der Warnleuchtsäule gemäß der Erfindung herausgeführt wird.

Die verwendeten Kabel 4 sind besonders dünn ausgeführt und weisen in vorteilhafter Weise eine unsichtbare bzw. transparente elektrische Isolierung auf.

Darüber hinaus sind in dargestelltem Beispiel die Kabel 4 lose bzw. frei herabhängend innerhalb der Warneinheiten 1 und/oder innerhalb des Sockels 2 geführt, so dass möglichst keine geradlinige Struktur generiert wird, die überraschenderweise von Personen wesentlich leichter wahrgenommen werden als wie in Figur 1 dargestellte unregelmäßige bzw. gewellte, lose elektrische Leiter 4. Generell können auch fest an den Komponenten 1, 2 fixierte Leiter 4 bzw. Leiterbahnen 4 vorgesehen werden, die in vorteilhafter Weise nicht geradlinig, sondern möglichst gewellt bzw. unregelmäßig innerhalb der Komponenten 1, 2 bzw. Warneinheiten 1 und Haltevorrichtung 2 und/oder zum Säulenende bzw. Flansch 5 geführt werden.

Die Warneinheiten 1, der Sockel 2 sowie ein Deckel 7 und ein Flansch 5 werden in vorteilhafter Weise miteinander fixiert. In Figur 1 ist sind Verbindungen 6 gekennzeichnet und vorzugsweise mit einem vorteilhaften Kleber als Klebeverbindung 6 ausgeführt. Die Verbindung 6 kann jedoch nicht nur verklebt, sondern auch ultaschallgeschweißt oder mittels einem ähnlichen Verbindungsverfahren realisiert werden. Auch kann eine lösbar fixierbare Verbindung 6 realisiert werden, z.B. mittels entsprechender stirnseitiger bzw. endständiger Ausnehmungen bzw. Ausfräsungen könnte ein Klemm-, Bajonettverschluss oder dergleichen realisiert werden. Auch mit den letztgenannten Verbindungsarten wäre eine durchgehende bzw. einheitliche Hülle gemäß der Erfindung realisierbar.

Die in Figur 1 dargestellte Ausführungsform der Erfindung ist besonders kostengünstig herstellbar, da bei diesem Ausführungsbeispiel standardisierte Plexiglasrohre, vorzugsweise mit rundem Querschnitt und in glasklarer Ausführung, das heißt ohne jegliche Lichtreflektoreffekte bzw. Rillen bzw. Riffelungen oder dergleichen verwendet werden. Demzufolge ist die erfindungsgemäße Warnleuchtsäule nicht nur besonders unscheinbar, sondern auch wirtschaftlich günstig herstellbar.

### Bezugszeichenliste

- 1: Warneinheit
- 2: Sockel/Fuß/Haltevorrichtung
- 3: Leuchtdiode
- 4: elektrischer Leiter/Kabel
- 5: Flansch
- 6: Verbindung
- 7: Deckel
- 8: Plexiglasrohrsegment/Kalotte

## Patentansprüche

1. Warnleuchtsäule zur optischen Anzeige von wenigstens einem Betriebszustand von einem technischen Gerät wie einer Maschine, einer Anlage, eines Fahrzeugs oder dergleichen mit wenigstens einer zumindest ein Warnleuchtelement und/oder eine Leuchtdiode und/oder ein Warntongenerator aufweisenden Warneinheit (1), bei der im Anschluss an die Warneinheit (1) in Richtung der Längsachse der Warnleuchtsäule eine Haltevorrichtung (2) angeordnet ist, wobei die Warneinheit (1) wenigstens ein im Wesentlichen als Rohrelement (8) ausgebildetes Mantelelement (8) zum Ummanteln des Warnleuchtelementes und/oder der Leuchtdiode und/oder des Warntongenerators aufweist, **dadurch gekennzeichnet, dass** die Haltevorrichtung (2) und das Mantelelement (8) der Warneinheit (1) als sichtbares Licht durchlässige Säulenelemente (1, 2, 8) ausgebildet sind und dass die Warnleuchtsäule eine im Wesentlichen sich über das/die Mantelelemente (8) sowie die Haltevorrichtung (2) erstreckende durchgehende, einheitliche Hülle (1, 2) aufweist.

2. Warnleuchtsäule nach Anspruch 1, **dadurch gekennzeichnet**, die Haltevorrichtung (2) im Wesentlichen aus einem Rohrelement (2, 8) wie das Mantelelement (8) der Warneinheit (1) ausgebildet ist, wobei in Richtung der Längsachse der Warnleuchtsäule betrachtet das Rohrelement (2, 8) der Haltevorrichtung (2) eine andere Länge als das Rohrelement (2, 8) des Mantelelementes (8) aufweist.

3. Warnleuchtsäule nach einem der vorgenannten Ansprüche, **dadurch gekennzeichnet, dass** die Hülle (1, 2, 8) und/oder die Rohrelemente (2, 8) des/der Mantelelemente (8) und der Haltevorrichtung (2) im Wesentlichen die gleichen Außendurchmesser aufweisen.

4. Warnleuchtsäule nach einem der vorgenannten Ansprüche, **dadurch gekennzeichnet, dass** die Haltevorrichtung (2) und zusammen mit dem/den Mantelelementen (8) der Warneinheit (1) oder Warneinheiten (1) als einstückiges Rohrelement (1, 2) bzw. einstückige Baueinheit (1, 2) ausgebildet ist.

5. Warnleuchtsäule nach einem der vorgenannten Ansprüche, **dadurch gekennzeichnet, dass** die Haltevorrichtung (2) und das Mantelelement (8) der Warneinheit (1) als Glas klares Rohrelement (2, 8) ausgebildet sind.

6. Warnleuchtsäule nach einem der vorgenannten Ansprüche, **dadurch gekennzeichnet, dass** die Warneinheit (1) und/oder die Haltevorrichtung (2) wenigstens einen elektrischen Leiter (4) zum Leiten von elektrischer Energie und/oder elektrischen Signalen aufweist.

7. Warnleuchtsäule nach einem der vorgenannten Ansprüche, **dadurch gekennzeichnet, dass** der Leiter (4) wenigstens eine Licht durchlässige und/oder Glas klare elektrische Isolierung aufweist.

8. Warnleuchtsäule nach einem der vorgenannten Ansprüche, **dadurch gekennzeichnet, dass** der elektrische Leiter (4) einen Leiterquerschnitt kleiner gleich 0,05 Millimetern aufweist.

9. Warnleuchtsäule nach einem der vorgenannten Ansprüche, **dadurch gekennzeichnet, dass** der elektrische Leiter (4) einen Leiterquerschnitt kleiner gleich 0,01 Millimetern aufweist.

10. Warnleuchtsäule nach einem der vorgenannten Ansprüche, **dadurch gekennzeichnet, dass** ein Kleber (6) zum Verbinden der Warneinheit (1) und/oder des Mantelelementes (8) mit der Haltevorrichtung (2) und/oder mit einer weiteren Warneinheit (1) und/oder einem weiteren Mantelelement (8)und/oder mit einem Deckelelement vorgesehen ist.
